# EUROPEAN PATENT APPLICATION

(11) **EP 2 403 274 A1**
(43) Date of publication of application: **04.01.2012**
(21) Application number: 10745801.0
(22) Date of filing: 26.01.2010
(51) Int. Cl.: H04W 4/00

(54) **WIRELESS COMMUNICATION SYSTEM AND DATA TRANSMISSION METHOD THEREOF**

(30) Priority: 27.02.2009 CN 200910118339
(71) Applicant: Fujitsu Limited, Kawasaki-shi, Kanagawa 211-8588 (JP)
(72) Inventor: ZHANG, Yuantao, Beijing 100025 (CN); WANG, Jian, Beijing 100025 (CN); ZHOU, Hua, Beijing 100025 (CN); TIAN, Jun, Beijing 100025 (CN)
(74) Representative: Wilding, Frances Ward
(86) International application number: PCT/CN2010/070356
(87) International publication number: WO 2010/097017

(57) **Abstract**

The invention provides a wireless communication system and a data transmission method thereof The wireless communication system includes a base station, a mobile station and a relay station which is transparent to the mobile station. The method includes that: the base station receives a first signal sent from the mobile station, and decodes the first signal. When the result of the decoding is incorrect, the base station sends a response to the relay station for indicating that the decoding is incorrect, but it does not send a response to the mobile station for indicating that the decoding to be incorrect.

## Description

### Technical Field

The invention relates to the field of wireless communication, and in particular to a wireless communication system and a method for data transmission in the system.

### Background

With the rapid development of wireless multimedia services, the requirements of the users on the data transmission capability and transmission quality becomes higher and higher. However, there exist many communication dead corners in complicated wireless environments due to blocking, shadows and the like, which make it difficult for the users to obtain continuous communication services of high rate and high quality. To solve the problem, a relay device may be used between two communication parties in wireless systems for forwarding the wireless communication signals between the two parties so as to improve the system throughput and user data rate.

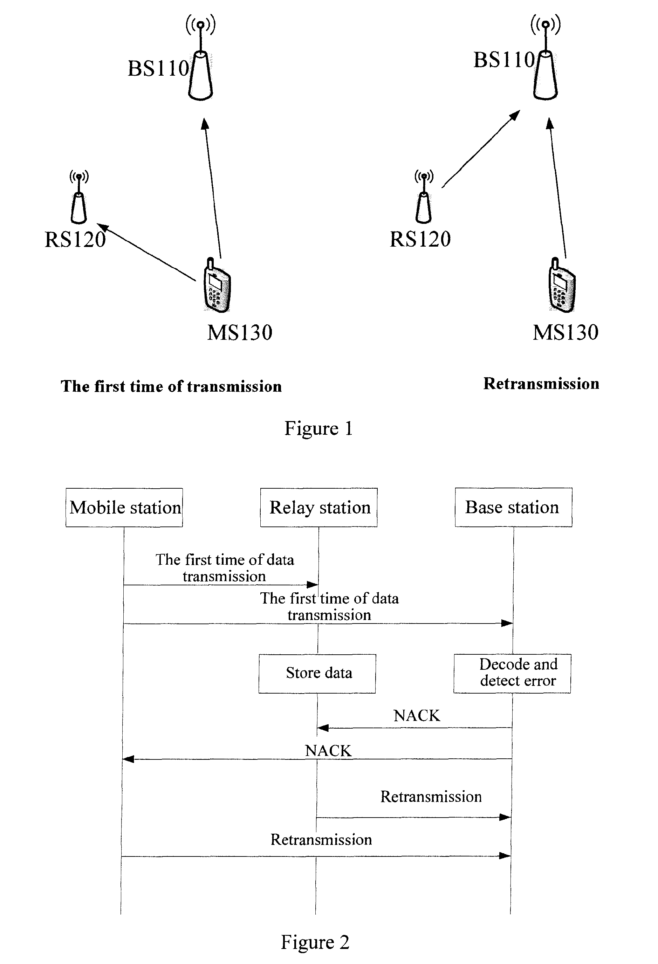

The relay may be classified into two types, i.e. transparent relay and non-transparent relay, according to whether the mobile station knows the existence of the relay station. Figure 1 illustrates an example of uplink data transmission by using transparent relay. As shown in Figure 1, during the first time of data transmission, a mobile station (MS) 130 transmits uplink data. A relay station (RS) 120 receives and stores the data. When a base station (BS) 110 determines that the data need to be retransmitted, both of the relay station 120 and the mobile station 130 retransmit the data to the base station at the same time, and the base station 110 merges and decodes the received data. Figure 2 illustrates the detailed transmission and receipt timing of the above procedure. As shown in Figure 2, the mobile station transmits the data to the relay station and the base station, and the relay station saves the received data. Then both of the relay station and the mobile station receive the decoding response signal ACK or NACK from the base station, where ACK indicates the base station decodes correctly and NACK indicates the base station decodes incorrectly. If the received decoding response signal is ACK, the mobile station may transmit new data at the next moment to the base station; and if the received decoding response signal is NACK, the mobile station and the relay station simultaneously retransmit the data to the base station at the next moment by using certain time and frequency resources and the base station merges the received data from the two parties.

In the above uplink data retransmission method, when data need to be retransmitted, both the relay station and the mobile station retransmit the data to the base station. Since the channel condition from the relay station to the base station is generally better than that from the mobile station to the base station, the relay station contributes more to the data retransmission and decoding than the mobile station.

In addition, the relay station and the mobile station have to use the same encoding and modulating manners during data retransmission. However, since the channel condition from the relay station to the base station is generally better than that from the mobile station to the base station, using the same encoding and modulating manners result in certain waste of resources.

It should be noted that the above description of the existing technology is just for facilitating the clear and full description of the disclosure, so that the disclosure is better understood by those skilled in the art. And the above solutions should not be regarded as known by those skilled in the art just for the reason that they are described in the background part of the disclosure.

### Summary

The invention proposes a wireless communication system and a data transmission method therein, by which one or more problems in the conventional uplink data transmission methods may be solved.

According to an aspect of the invention, there is provided a method for data transmission in a wireless communication system including a base station, a mobile station and a relay station transparent to the mobile station. The method may include: receiving, by the base station, a first signal transmitted from the mobile station, decoding the first signal, and when a result of the decoding is incorrect, transmitting a response indicating the result of the decoding is incorrect to the relay station without transmitting a response indicating the decoding to be incorrect to the mobile station.

According to another aspect of the invention, there is provided a base station in a wireless communication system, the base station may include: a receiving module, adapted to receive signals from a mobile station or a relay station in the wireless communication system; a decoding module, adapted to decode a first signal transmitted from the mobile station or a second signal transmitted from the relay station when the receiving module receives the first signal or the second signal; a judging module, adapted to judge whether a result of the decoding performed by the decoding module is correct; and a response feedback module, adapted to transmit responses to the mobile station or the relay station, wherein when the judging module judges that a result of the decoding performed by the decoding module is incorrect, the response feedback module is adapted to transmit a response indicating the result of the decoding is incorrect to the relay station without sending a response indicating the result of the decoding is incorrect to the mobile station.

According to another aspect of the invention, there is provided a wireless communication system. The wireless communication system includes the above base station and further includes a mobile station and a relay station transparent to the mobile station, wherein the mobile station includes a transmitting module adapted to transmit a first signal uplink; the relay station includes a relay receiving module adapted to receive the first signal transmitted from the mobile station and a request for retransmission transmitted from the base station, a storing module adapted to store the first signal, and a relay transmitting module adapted to transmit, in response to the received request for retransmission, a second signal generated based on the first signal to the base station.

In the embodiments of the invention, when the base station incorrectly decodes the received data from the mobile station, it transmits a decoding response NACK to the relay station, without transmitting the NACK to the mobile station. In particular, no matter whether the base station decodes correctly or not, the response sent by the base station to the mobile station may be always a response ACK indicating the result of decoding is correct, while the response sent to the relay station is the actual decoding response ACK or NACK based on the decoding result. In this way, when the data need to be retransmitted, only the relay station retransmits the data to the base station, while the mobile station may keep silent so as to save transmission power and time-frequency resources. The relay station, when retransmitting the data, may use the same encoding and modulating manners as those employed by the mobile station when the mobile station transmits data the first time, alternatively the relay station may adjust adaptively the encoding and modulating manners according to the channel condition from the relay station to the base station, so as to save the resources occupied by data retransmission or may use predetermined encoding and modulating manners.

These and further aspects and features of the invention will become better understood with reference to the following description and the drawings, in which some particular embodiments are detailed and the manner by which the principle of the invention is applied is described. It should be noted that the scope of the invention should not be limited to these. Many modifications, alterations and equivalents within the scope and spirit of the claims may be made and should be encompassed within the disclosure.

In addition, some feature(s) described and/or illustrated in one embodiment may be used in one or more other embodiments in the same or similar manners, may be combined with the features in the other embodiments or may be used to replace some features in the other embodiments.

It should be noted that the term "comprise / include" in the disclosure is used to indicate the existence of a feature, component, step or element, and should not be regarded as excluding the existence of other features, components, steps or elements.

Aspects of the invention can be better understood with reference to the drawings. In the drawings the components are merely used to illustrate the principle of the invention and are not drawn in proportion. To illustrate and show some aspects of the invention, corresponding components in the drawing may be amplified, i.e. may be shown larger compared with other components in the example devices. The elements and features shown in one drawing or one embodiment may be combined with the elements and features in other drawing or embodiment. In addition, in the drawings like reference signs may be used to represent corresponding components in several drawings and may be used to indicate the corresponding components in more than one embodiment.

### Brief Description of the Drawings

The drawings which illustrate some preferred embodiments of the invention constitute a part of the disclosure and further illustrate the principle of the invention together with the literal description. In the drawings,

Figure 1 is a schematic diagram illustrating conventional uplink data transmission using transparent relay;

Figure 2 is a schematic diagram illustrating the transmitting and receiving timing of uplink data and response in conventional transparent relay during data retransmission;

Figure 3 is a schematic diagram illustrating data transmission using transparent relay in a wireless communication system according to an embodiment of the invention;

Figure 4 is a schematic diagram illustrating the transmitting and receiving timing of data and response signals using transparent relay during data retransmission according to an embodiment of the invention;

Figure 5 is a block diagram illustrating an example structure of a base station according to an embodiment of the invention;

Figure 6 is a flow chart illustrating an example of data processing procedure performed by a base station according to an embodiment of the invention;

Figure 7 is a block diagram illustrating an example structure of a relay station according to an embodiment of the invention;

Figure 8 is a flow chart illustrating an example of data processing procedure performed by a relay station according to an embodiment of the invention;

Figure 9 is a flow chart illustrating an example of data processing procedure preformed by a mobile station served by the relay station shown in Figure 7; and

Figure 10 illustrates modulation manners of decoding response signals according to some embodiments of the invention.

### Detailed Description of Embodiments

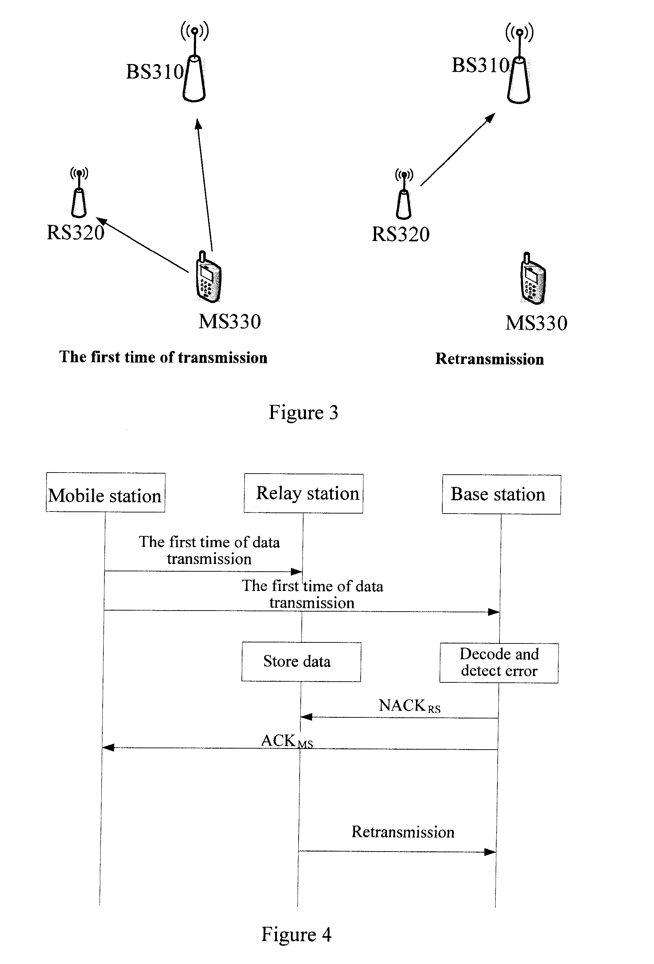

Figure 3 is a schematic diagram illustrating data transmission using transparent relay in a wireless communication system according to an embodiment of the invention. As shown in Figure 3, a wireless communication system 300 includes a base station (BS) 310, a relay station (RS) 320 and a mobile station (MS) 330. The relay station 320 is transparent to the mobile station 330. When transmitting data the first time (e.g. at the first time slot), the mobile station 330 uplink transmits a first signal generated by encoding and modulating the data to be transmitted. The base station 310 receives and decodes the first signal from the mobile station 330. When the base station 310 determines that the data need to be retransmitted, the base station 310 transmits a retransmission request or a response NACK indicating the result of the decoding is incorrect to the relay station 320. In other words, the retransmission request or the response NACK indicating the result of the decoding is incorrect is not sent to the mobile station 330.

The relay station 320 also receives the first signal from the mobile station 330 and it stores the first signal. When the data need to be retransmitted, the relay station 320 retransmits the data to the base station 310, while the mobile station 330 needs not to do the retransmission.

In an example, when the base station 310 determines the data need to be retransmitted, the base station 310 may further send a response ACK indicating the result of the decoding is correct to the mobile station 330.

In an example, the base station 310 may return a response ACK to the mobile station 330 upon receiving the data from the mobile station, regardless of the result of the following decoding.

Optionally, when the result of the decoding is correct, the base station 310 may return a response ACK to both of the relay station 320 and the mobile station 330.

In an example, when receiving the retransmission request or the response NACK from the base station 310, the relay station 320 may directly sent the stored first signal from the mobile station to the base station 310, that is, the signal retransmitted by the relay station 320 may be the first signal received by the relay station from the mobile station 330. Optionally, the relay station 320 may extract the data to be retransmitted from the first signal, re-encode and re-modulate the data to generate a second signal and sent the second signal to the base station 310. Here the second signal may be encoded and modulated by using the encoding and modulating manners selected adaptively according to the channel condition between the relay station 320 and the base station 310, or the encoding and modulating manners pre-agreed between the relay station 320 and the base station 310. In other words, the relay station 320 may encode and modulate the data to be retransmitted by using encoding and modulating manners different from those used to encode and modulate the first signal, so as to save resources occupied by the retransmission.

Figure 4 illustrates the transmitting and receiving timing of the above procedure. As shown in Figure 4, the mobile station transmits uplink data, e.g. at the first time slot. The relay station stores the received data. The base station decodes the received data. When the decoding result indicates the data contain error, the base station transmits a decoding response NACK to the relay station. The decoding response NACK is not sent to the mobile station. Optionally, when the decoding result indicates the data contain error, the base station may further send a decoding response ACK indicating the decoding result is correct to the mobile station. Then, the relay station retransmits the data to the base station, while the mobile station does not perform the retransmission.

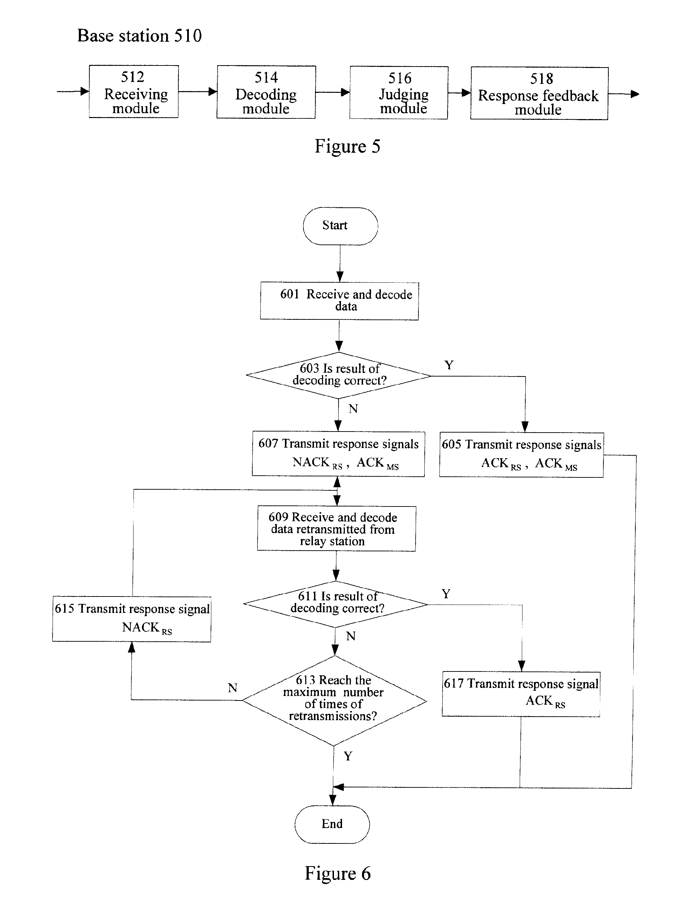

Figure 5 illustrates the structure of a base station according to an embodiment of the invention. Figure 6 illustrates a data processing flow chart of the base station shown in Figure 5.

As shown in Figure 5, a base station 510 includes a receiving module 512, a decoding module 514, a judging module 516 and a response feedback module 518. The receiving module 512 is adapted to receive a signal from a mobile station or a relay station in the wireless communication system. The decoding module 514 is adapted to decode the received signal. The response feedback module 518 is adapted to return a decoding response ACK or NACK to the mobile station or the relay station. The judging module 516 is adapted to judge whether the decoding result of the decoding module 514 is correct and control the response feedback module 518 according to the judging result.

When the decoding result is incorrect, the response feedback module 518, under the control of the judging module 516, transmits a response NACK_{RS} indicating the result of the decoding is incorrect to the relay station, without sending the response indicating the result of the decoding is incorrect to the mobile station, so that the relay station retransmits the data while the mobile station does not perform the retransmission.

Optionally, when the decoding result is incorrect, the response feedback module 518 may send a response ACK_{Ms} indicating the result of the decoding is correct to the mobile station, to further ensure that the mobile station do not perform the retransmission. Optionally, the response feedback module 518 may include the responses NACK_{RS} and ACK_{Ms} in the same decoding response signal. Optionally, before sending the decoding response signal, the response feedback module 518 may modulate the decoding response signal by using a modulation manner to be described below. In another example, the response feedback module 518 may send the responses NACK_{RS} and ACK_{MS} to the relay station and the mobile station respectively as separate signals, and in this case the responses may be transmitted in multiplexed manner. The method of multiplexing may be for example CDM (Code Division Multiplexing), TDM (Time Division Multiplexing), or FDM (Frequency Division Multiplexing), or the like. Of course, the multiplexing manners listed here are only exemplary rather than exhaustive, those skilled in the art may use any other appropriate multiplexing manners.

Optionally, the response feedback module 518 may transmit a response ACK indicating the result of decoding is correct to the mobile station and/or the relay station when the result of decoding is correct. Optionally, the response feedback module 518 may include the responses ACK to be returned to the mobile station and the relay station in the same decoding response signal. Alternatively the response feedback module 518 may transmit the responses ACK to the mobile station and the relay station as separate signals.

Below, an example of a data processing procedure performed by the base station shown in Figure 5 is described with reference to Figure 6.

As shown in Figure 6, in step 601 the receiving module of the base station receives the data from the mobile station, and the decoding module of the base station decodes the received data. In step 603, the judging module of the base station judges whether the result of decoding is correct; and if not, the processing moves to step 607, otherwise, step 605 is performed. In step 605, the response feedback module of the base station transmits the responses ACK_{RS} and ACK_{Ms} indicating the result of the decoding is correct to the relay station and/or the mobile station, thus ending the data transmission. The responses ACK_{RS} and ACK_{Ms} may be included in the same decoding response signal. Optionally, the responses ACK_{RS}, ACK_{Ms} may be sent to the relay station and the mobile station respectively, as separate signals. In addition, the method may exclude step 605. In other words, if the result of decoding is correct, the base station may end the data transmission without returning a response.

In step 607, the response feedback module of the base station returns a response NACK_{RS} indicating the decoding result is incorrect to the relay station. Optionally, the base station may send a response ACK_{MSm} indicating the result of decoding is correct to the mobile station. In the case that the base station respectively returns NACK_{RS} and ACK_{MS} to the relay station and the mobile station, these responses NACK_{RS}, ACK_{MS} may be included in the same decoding response signal. Optionally, before transmitting the decoding response signal, the decoding response signal may be modulated, which will be described in detail below.

In another example, the responses NACK_{RS}, ACK_{MSt} from the base station to the relay station and the mobile station may be sent as separate signals to the relay station and the mobile station respectively. In this case the responses may be transmitted in multiplexed manner. The method of multiplexing may be for example CDM (Code Division Multiplexing), TDM (Time Division Multiplexing), or FDM (Frequency Division Multiplexing), or the like. Of course, the multiplexing manners listed here are only exemplary, rather than exhaustive, those skilled in the art may use any other appropriate multiplexing manners.

In step 609, the base station receives the retransmitted data from the relay station, and merges and decodes the data. In step 611, the base station judges whether the result of decoding is correct, if yes, the processing moves to step 617, otherwise, the processing moves to step 613.

In step 617, the base station transmits a response signal ACK_{RS} indicating the result of decoding is correct to the relay station, thus ending the data transmission.

In step 613, the base station judges whether the number of times of retransmission reaches a predetermined maximum number of times for retransmission, and if yes, ends the data transmission, otherwise, the processing moves to step 615. The step 613 is optional. Alternatively, as described below the judgment on the number of times for retransmission may be performed by the relay station.

In step 615, the base station transmits a retransmission request or a response NACK_{RS} indicating the result of decoding is incorrect to the relay station, and then the processing moves to step 609.

In the above embodiment, the retransmission request or the response indicating the result of decoding is incorrect (error) are transmitted by the base station when data retransmission is necessary. Both of the two signals function to cause their receiving node (e.g. the relay station) to retransmit data. Thus the two terms are used interchangeably in the context.

As appreciated by those skilled in the art, the above embodiments are illustrative rather than limiting. The methods according to embodiments of the invention may be performed in a step sequence different from those described above. For example, the base station, when determining the result of decoding is incorrect, may firstly return a response NACK_{RS} to the relay station before judging on whether the number of times for retransmission reach a predetermined value. For another example, the base station may choose not to return a response ACK_{RS} to the relay station when the result of decoding is correct. As appreciated by those skilled in the art, as long as the principle of the invention may be implemented, the above methods may be performed in different step orders, or one or more other steps may be inserted thereto; alternatively one or more steps in the methods may be omitted as appropriate.

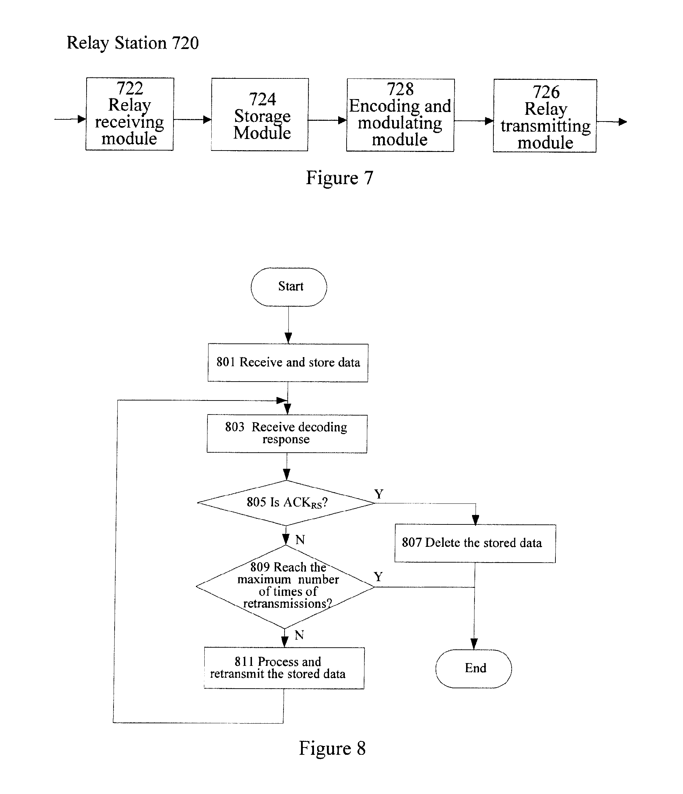

Figure 7 illustrates an example of the structure of a relay station according to an embodiment of the invention.

As shown in Figure 7, the relay station 720 includes a relay receiving module 722, a storage module 724 and a relay transmitting module 726. The relay receiving module 722 is adapted to receive data sent from the mobile station. The storage module 724 is adapted to store the received data from the mobile station. The relay receiving module 722 is further adapted to receive a response returned from the base station. When the relay receiving module 722 receives a response indicating the result of decoding is incorrect or a retransmission request from the base station, the relay transmitting module 726 retransmits the data stored in the storage module 724 to the base station.

The storage module 724 may delete the stored data when the receiving module 722 receives a response indicating the result of decoding is correct from the base station. Optionally, the storage module 724 may delete the stored data if the receiving module 722 does not receive a response from the base station within a predetermined time period.

In an example, the relay station 720 may further include an encoding and modulating module 728. The encoding and modulating module 728 is adapted to encode and modulate the data to be retransmitted and transmits the encoded and modulated data to the relay transmitting module 726. The relay transmitting module 726 may retransmit the data encoded and modulated by the encoding and modulating module 728.

The encoding and modulating module 728 may encode and modulate the data to be retransmitted using any one of the following encoding and modulating manners: encoding and modulating manners that are the same as those used by the mobile station when the mobile station transmits data, encoding and modulating manners selected adaptively according to the channel condition between the relay station and the base station, or predetermined encoding and modulating manners.

Optionally, the relay transmitting module 726 may retransmit data by using the time-frequency resource used by the mobile station when the mobile station transmits data to the base station. Of course, the relay transmitting module 726 may use other time-frequency resources.

Optionally, the relay transmitting module 726 may utilize synchronous retransmission or asynchronous transmission for data retransmission.

Figure 8 illustrates an example of a data processing procedure performed by the relay station shown in Figure 7. As shown in Figure 8, in step 801 the relay station receives and stores the data from the mobile station. In step 803, the relay station receives a decoding response from the base station. In step 805, the relay station determines whether the decoding response is an ACK indicating the result of the decoding is correct. If the response is ACK, the processing moves to step 807, otherwise, the processing moves to step 809.

In step 807, the storage module of the relay station deletes the previously stored data and ends the data retransmission. Optionally, when the response from the base station is not received within a predetermined time period, the relay station may choose to delete the previously stored data and end the data retransmission.

In step 809, the relay station judges whether the number of times of retransmission having been performed reaches a maximum number of times for retransmission, and if yes, the relay station ends the data retransmission, otherwise the processing moves to step 811.

As shown in Figure 6, the judgment on the number of times for retransmission may be performed by the base station. In other words, the processing procedure performed by the relay station may exclude step 809.

In step 811, the relay station processes the data to be retransmitted and then retransmits the data. Optionally, the relay station may send the stored data from the mobile station to the base station directly. Alternatively the relay station may re-encode and re-modulate the data to be retransmitted. The relay station may encode and modulate the data to be retransmitted using any one of the following encoding and modulating manners: encoding and modulating manners that are the same as those used by the mobile station when the mobile station transmits data, encoding and modulating manners selected adaptively according to the channel condition between the relay station and the base station, or predetermined encoding and modulating manners.

In an example, the relay station may retransmit data by using the time-frequency resource used by the mobile station when the mobile station transmits data to the base station. Of course, the relay station may use other time-frequency resources.

Optionally, the relay station may utilize synchronous retransmission or asynchronous transmission for data retransmission.

As appreciated by those skilled in the art, the above data processing procedure may be performed in a step sequence different from those described above. As long as the principle of the invention may be implemented, the above procedure may be performed in different step orders, or one or more other steps may be inserted thereto; alternatively one or more steps in the procedure may be omitted as appropriate.

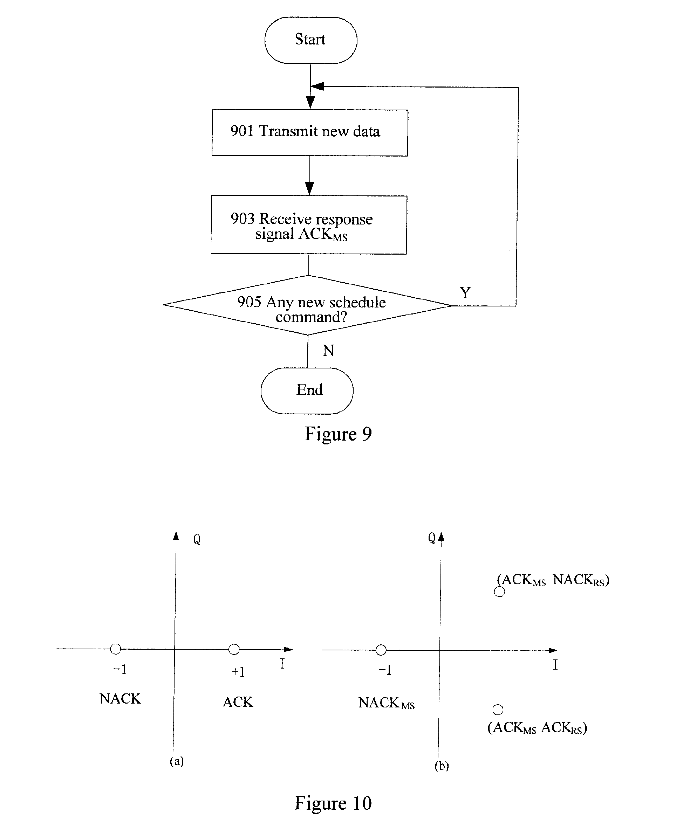

Figure 9 illustrates a data processing procedure performed by a mobile station according to an embodiment of the invention. As shown in Figure 9, in step 901 the mobile station transmits data to the relay station and the base station. In step 903, the mobile station receives a decoding response signal ACK_{MS} from the base station. In step 905, the mobile station judges whether there is a new schedule command. If yes, the processing moves to step 901.

Figure 10 (a) and (b) illustrate examples of decoding response signals in the case that the responses returned from the base station to the mobile station and the relay station are included in different decoding response signals and in the case that the responses are included in the same decoding response signal, respectively.

As shown in Figure 10(a), the base station includes the responses to the mobile station and the relay station in different decoding response signals, and transmits the decoding response signals to the mobile station and the relay station, respectively, by using different resources. The two decoding response signals both are BPSK modulated, in which ACK may be mapped as +1 and NACK may be mapped as -1.

As shown in Figure 10(b), the base station includes the responses to the mobile station and the relay station in the same decoding response signal, and transmits the decoding response signal to the mobile station and the relay station, respectively, by using the same resource. For example, NACK_{MS} may be mapped as -1, (NACK_{RS}, ACK_{MS}) may be mapped as (1+i)/sqrt(2), or (ACK_{RS}, ACK_{MS}) may be mapped as (1-i)/sqrt(2). Herein sqrt(2) represents the square root of 2.

Those skilled in the art will appreciate that the mapping methods described above are merely illustrative. Other mapping methods may be used as appropriate.

The solutions according to the embodiments of the invention may be applied to for example TDD (Time Division Duplex) or FDD (Frequency Division Duplex) systems.

As appreciated by those skilled in the art, all of or part of the steps or components in the methods or apparatus according to the embodiments of the invention may be implemented in any computing device (including a processor, a storage medium and the like), in the form of hardware, software or the combination thereof, which can be implemented by those skilled in the art by using their basic programming skills after reading the present disclosure and the description of which is thus omitted.

Therefore, based on the above understanding the objects of the disclosure may also be implemented by running a program or a set of programs on any information processing device. The information processing device may be any known generally used device. Thus, the objects of the disclosure may be implemented by a program product including the program codes for implementing the method or apparatus. In other words, such program product, or a storage medium storing such program product, also constitutes the disclosure. Apparently the storage medium may be any storage mediums already known or to be developed, which are not detailed herein.

In the method or apparatus according to embodiments of the invention, the steps or components may be decomposed, combined and/or recombined after being decomposed. Such decomposition, combination and/or recombination should be considered as equivalents of the invention.

Some embodiments of the invention have described above. However, those skilled in the art will appreciate that the scope of the disclosure is not limited to the disclosed details, but should cover various variations and equivalents within the spirit of the invention.

## Claims

1. A method for data transmission in a wireless communication system comprising a base station, a mobile station and a relay station transparent to the mobile station, the method comprising:
receiving, by the base station, a first signal transmitted from the mobile station, decoding the first signal, and when a result of the decoding is incorrect, transmitting a response indicating the result of the decoding is incorrect to the relay station without transmitting a response indicating the result of the decoding to be incorrect to the mobile station.

2. The method according to claim 1, further comprising: transmitting a response indicating the result of the decoding is correct to the mobile station by the base station when the result of the decoding is incorrect.

3. The method according to claim 1, further comprising: transmitting a response indicating the result of the decoding is correct to the mobile station by the base station when receiving the first signal transmitted from the mobile station.

4. The method according to any one of claims 1-3, further comprising:
receiving and storing, by the relay station, the first signal transmitted from the mobile station, and transmitting, by the relay station, a second signal generated based on the first signal when the relay station receives the response indicating the result of the decoding is incorrect from the base station; and
combining, by the base station, the second signal with the first signal and decoding the combined signal after the base station receives the second signal; when a result of the decoding of the combined signal is incorrect, judging by the base station whether a number of times of retransmission already performed is smaller than a preset maximum number of times of retransmission; and transmitting a request for retransmission to the relay station by the base station if the number of times of retransmission is smaller than the preset maximum number, so that the relay station retransmits the second signal.

5. The method according to claim 4, wherein the second signal is the same as the first signal, or the second signal is generated by encoding and modulating data in the first signal using any one of the following encoding and modulating modes: an encoding and modulating mode adaptively selected based on channel condition between the base station and the relay station or a predetermined encoding and modulating mode.

6. The method according to claim 4, wherein the second signal is transmitted using the same time and frequency resources as those for transmitting the first signal or other time and frequency resources.

7. The method according to claim 4, wherein the second signal is transmitted in a synchronous retransmission mode or in an asynchronous retransmission mode.

8. A base station in a wireless communication system, comprising:
a receiving module, adapted to receive signals from a mobile station or a relay station in the wireless communication system;
a decoding module, adapted to decode a first signal transmitted from the mobile station or a second signal transmitted from the relay station when the receiving module receives the first signal or the second signal;
a judging module, adapted to judge whether a result of the decoding performed by the decoding module is correct; and
a response feedback module, adapted to transmit responses to the mobile station or the relay station,
wherein when the judging module judges that a result of the decoding performed by the decoding module is incorrect, the response feedback module is adapted to transmit a response indicating the result of the decoding is incorrect to the relay station without sending a response indicating the result of the decoding is incorrect to the mobile station.

9. The base station according to claim 8, wherein the response feedback module is further adapted to transmit a response indicating the result of the decoding is correct to the mobile station when the judging module judges that a result of decoding of the first signal is incorrect.

10. The base station according to claim 8, wherein the response feedback module is further adapted to transmit a response indicating the result of the decoding is correct to the mobile station when the receiving module receives the first signal.

11. The base station according to claim 8, wherein the judging module is further adapted to judge, when a result of decoding of the second signal is incorrect, whether a number of times of retransmission already performed is smaller than a preset maximum number of times of retransmission, and instruct the response feedback module to transmit a request for retransmission to the relay station if the number of times of retransmission already performed is smaller than the preset maximum number so that the relay station retransmits the second signal.

12. A wireless communication system comprising a mobile station and a relay station transparent to the mobile station, further comprising a base station according to any one of claims 8-11, wherein
the mobile station comprises a transmitting module adapted to transmit a first signal uplink;
the relay station comprises a relay receiving module adapted to receive the first signal transmitted from the mobile station and a request for retransmission transmitted from the base station, a storing module adapted to store the first signal, and a relay transmitting module adapted to transmit, in response to the received request for retransmission, a second signal generated based on the first signal to the base station.

13. The wireless communication system according to claim 12, wherein the second signal is the same as the first signal.

14. The wireless communication system according to claim 12, wherein the relay station further comprises an encoding and modulating module adapted to encode and modulate data in the first signal using any one of the following encoding and modulating modes to generate the second signal: an encoding and modulating mode adaptively selected based on channel condition between the base station and the relay station or a predetermined encoding and modulating mode.

15. The wireless communication system according to any one of claims 12-14, wherein the relay transmitting module utilizes the same time and frequency resources as those for transmitting the first signal or other time and frequency resources to transmit the second signal.
